# EUROPEAN PATENT APPLICATION

(11) **EP 4 622 210 A1**
(43) Date of publication of application: **24.09.2025**
(21) Application number: 23942776.8
(22) Date of filing: 28.06.2023
(51) Int. Cl.: H04L 45/12, H04W 28/10

(54) **ROUTING INFORMATION MAINTENANCE METHOD AND APPARATUS, AND NETWORK DEVICE AND STORAGE MEDIUM**

(71) Applicant: New H3C Technologies Co., Ltd., Hangzhou, Zhejiang 310052 (CN)
(72) Inventor: YE, Jinrong, Beijing 100102 (CN); ZHONG, Haina, Beijing 100102 (CN)
(74) Representative: IPAZ
(86) International application number: PCT/CN2023/103048
(87) International publication number: WO 2025/000254

(57) **Abstract**

The embodiments of the present application relate to the technical field of communications. Provided are a routing information maintenance method and apparatus, and a network device and a storage medium. The method is applied to a first network device, wherein the first network device comprises a multi-path group forwarding table, a first multi-path group corresponding to the multi-path group forwarding table comprises the shortest path and a non-shortest path, each path is configured to indicate a path between the first network device and a second network device, and a forwarding table entry of the shortest path comprises a first egress interface of the first network device. The method comprises: when traffic borne by the shortest path makes a first egress interface congested, acquiring a preset routing policy corresponding to a multi-path group forwarding table; and on the basis of the preset routing policy, adjusting a forwarding weight value of each path in a first multi-path group, wherein the forwarding weight value of each path is configured to represent the proportion of traffic borne by the path when the path is selected from among multiple paths for message forwarding. In this way, the overall bandwidth utilization rate of a network can be increased.

## Description

### Technical Field

The present application relates to the technical field of communications, in particular to a method and an apparatus for maintaining routing information, a network device, and a storage medium.

### Background

Adaptive routing technology is a technology for dynamic routing decision according to the changes of network topology and traffic load. Based on the adaptive routing technology, the network device can actively sense the congestion state of the link, thereby choosing the shortest and non-congested path to forward a packet.

The network device can create and maintain best path tables based on routing information and link congestion state, with each best path table used to store a best path corresponding to a destination Internet Protocol (IP) address. The best path can be a shortest path to a destination IP address. In response to determining that congestion occurs on the shortest path, the best path is modified to be a non-shortest path to the destination IP address.

After a best path in the best path table is modified to a non-shortest path, the network device uses the non-shortest path to forward a packet containing the destination IP address, then the shortest path is disabled, resulting in a decrease in network bandwidth utilization.

### Summary

The examples of the present application provide a method and an apparatus for maintaining routing information, a network device, and storage medium for solving the problem of reduced network bandwidth utilization after the shortest path in the best path table is modified, specifically including the following solutions.

In a first aspect, an example of the present application provides a method for maintaining routing information, which is applied to a first network device, which includes a multipath group forwarding table, a first multipath group corresponding to the multipath group forwarding table includes a shortest path and a non-shortest path, each path being used to indicate a path between the first network device and a second network device; and wherein a forwarding table entry of the shortest path includes a first outbound interface of the first network device; the method comprises:
acquiring, in response to determining that a traffic carried by the shortest path causes congestion on the first outbound interface, a preset routing strategy corresponding to the multipath group forwarding table;
adjusting a forwarding weight value of each path in the first multipath group based on the preset routing strategy, wherein the forwarding weight value of each path is used to indicate, when selecting the path from the first multipath group for packet forwarding, a traffic ratio carried by the path.

In a possible implementation, the multipath group forwarding table includes a software forwarding table and a hardware forwarding table; the method further comprises:
calculating a shortest path and a non-shortest path to the second network device;
generating a software forwarding table entry for each shortest path and each non-shortest path respectively to obtain the software forwarding table, wherein each software forwarding table entry includes a forwarding weight value of a path, and an initial forwarding weight value of the non-shortest path is 0;
for each software forwarding table entry with a forwarding weight value other than 0, making N copies of information in the software forwarding table entry other than the forwarding weight value to obtain N hardware forwarding table entries, and issuing the N hardware forwarding table entries to a hardware resource to obtain the hardware forwarding table;
wherein N=the forwarding weight value of the software forwarding table entry * a preset number of table entries of the hardware forwarding table /a sum value of forwarding weight values included in the software forwarding table entries.

In a possible implementation, the multipath group forwarding table includes a routing type marker; acquiring a preset routing strategy corresponding to the multipath group forwarding table comprises:
acquiring a preset routing strategy corresponding to the routing type marker;
wherein the preset routing strategy at least includes one of the following strategies: adjusting a forwarding load of a congested outbound interface to 0, reducing a forwarding load of a congested outbound interface without increasing a forwarding load of the non-shortest path, reducing a forwarding load of a congested outbound interface with increasing a forwarding load of the non-shortest path.

In a possible implementation, the first network device stores a first interface state table and a second interface state table corresponding to the multipath group forwarding table, the first interface state table includes an interface state of each outbound interface of the first network device, and the second interface state table includes a bandwidth usage of the traffic carried by each path in the first multipath group for the outbound interface;
before acquiring, in response to determining that a traffic carried by the shortest path causes congestion on the first outbound interface, a preset routing strategy corresponding to the multipath group forwarding table, the method further comprises:
in response to determining that the interface state of the first interface in the first interface state table changes to a congested state, acquiring a first bandwidth usage of the traffic carried by the shortest path for the first outbound interface from the second interface state table;
in response to determining that the first bandwidth usage meets a preset congestion condition, determining that the traffic carried by the shortest path causes congestion on the first outbound interface.

In a possible implementation, the first interface state table further includes a bandwidth usage and a buffer usage of each outbound interface; the method further comprises:
for each outbound interface in the first interface state table, updating the bandwidth usage and the buffer usage of the outbound interface every preset duration;
in response to determining that an updated bandwidth usage of the outbound interface reaches a preset bandwidth threshold, or in response to determining that an updated buffer usage of the outbound interface reaches a preset buffer threshold, setting the interface state of the outbound interface to the congested state.

In a possible implementation, adjusting the forwarding weight value of each path in the first multipath group based on the preset routing strategy, comprises:
adjusting the forwarding weight value of each path in the first multipath group based on the preset routing strategy and a bandwidth usage of each outbound interface included in the second interface state table.

In a possible implementation, multiple paths between the first network device and a third network device form a second multipath group, and in a case where the first multipath group is the same as the second multipath group, the first multipath group and the second multipath group share the multipath group forwarding table.

In a second aspect, an example of the present application provides an apparatus for maintaining routing information, which is applied to a first network device, which includes a multipath group forwarding table, a first multipath group corresponding to the multipath group forwarding table includes a shortest path and a non-shortest path, each path being used to indicate a path between the first network device and a second network device; and wherein a forwarding table entry of the shortest path includes a first outbound interface of the first network device; the apparatus comprises:
an acquiring module, to acquire, in response to determining that a traffic carried by the shortest path causes congestion on the first outbound interface, a preset routing strategy corresponding to the multipath group forwarding table;
an adjusting module, to adjust a forwarding weight value of each path in the first multipath group based on the preset routing strategy, wherein the forwarding weight value of each path is used to indicate, when selecting the path from the first multipath group for packet forwarding, a traffic ratio carried by the path.

In a possible implementation, the multipath group forwarding table includes a software forwarding table and a hardware forwarding table; and the generating module is to:
calculate a shortest path and a non-shortest path to the second network device;
generate a software forwarding table entry for each shortest path and each non-shortest path respectively to obtain the software forwarding table, wherein each software forwarding table entry includes a forwarding weight value of a path, and an initial forwarding weight value of the non-shortest path is 0;
for each software forwarding table entry with a forwarding weight value other than 0, make N copies of information in the software forwarding table entry other than the forwarding weight value to obtain N hardware forwarding table entries, and issue the N hardware forwarding table entries to a hardware resource to obtain the hardware forwarding table;
wherein N=the forwarding weight value of the software forwarding table entry * a preset number of table entries of the hardware forwarding table /a sum value of forwarding weight values included in the software forwarding table entries.

In a possible implementation, the multipath group forwarding table includes a routing type marker; the acquiring module is specifically to:
acquire a preset routing strategy corresponding to the routing type marker; wherein the preset routing strategy at least includes one of the following strategies: adjusting a forwarding load of a congested outbound interface to 0, reducing a forwarding load of a congested outbound interface without increasing a forwarding load of the non-shortest path, reducing a forwarding load of a congested outbound interface with increasing a forwarding load of the non-shortest path.

In a possible implementation, the first network device stores a first interface state table and a second interface state table corresponding to the multipath group forwarding table, the first interface state table includes an interface state of each outbound interface of the first network device, and the second interface state table includes a bandwidth usage of the traffic carried by each path in the first multipath group for the outbound interface; the apparatus further includes a determining module, wherein
the acquiring module is further to acquire, in response to determining that the interface state of the first interface in the first interface state table changes to a congested state, a first bandwidth usage of the traffic carried by the shortest path for the first outbound interface from the second interface state table;
the determining module is to determine, in response to determining that the first bandwidth usage meets a preset congestion condition, that the traffic carried by the shortest path causes congestion on the first outbound interface.

In a possible implementation, the first interface state table further includes a bandwidth usage and a buffer usage of each outbound interface; the apparatus further includes an updating module and a setting module; wherein
the updating module is to update, for each outbound interface in the first interface state table, the bandwidth usage and the buffer usage of the outbound interface every preset duration;
the setting module is to set, in response to determining that an updated bandwidth usage of the outbound interface reaches a preset bandwidth threshold, or in response to determining that an updated buffer usage of the outbound interface reaches a preset buffer threshold, the interface state of the outbound interface to the congested state.

In a possible implementation, the adjusting module is specifically to:
adjust the forwarding weight value of each path in the first multipath group based on the preset routing strategy and a bandwidth usage of each outbound interface included in the second interface state table.

In a possible implementation, multiple paths between the first network device and a third network device form a second multipath group, and in a case where the first multipath group is the same as the second multipath group, the first multipath group and the second multipath group share the multipath group forwarding table.

In a third aspect, an example of the present application provides a first network device, which includes a multipath group forwarding table, a first multipath group corresponding to the multipath group forwarding table includes a shortest path and a non-shortest path, each path being used to indicate a path between the first network device and a second network device; and wherein a forwarding table entry of the shortest path includes a first outbound interface of the first network device; the first network device comprises:
a processor;
a transceiver;
a machine readable storage medium storing machine executable instructions, which when executed by the processor, cause the processor to perform the following blocks:
   acquiring, in response to determining that a traffic carried by the shortest path causes congestion on the first outbound interface, a preset routing strategy corresponding to the multipath group forwarding table;
   adjusting a forwarding weight value of each path in the first multipath group based on the preset routing strategy, wherein the forwarding weight value of each path is used to indicate, when selecting the path from the first multipath group for packet forwarding, a traffic ratio carried by the path.

In a possible implementation, the multipath group forwarding table includes a software forwarding table and a hardware forwarding table; the machine executable instructions further cause the processor to execute the following blocks:
calculating a shortest path and a non-shortest path to the second network device;
generating a software forwarding table entry for each shortest path and each non-shortest path respectively to obtain the software forwarding table, wherein each software forwarding table entry includes a forwarding weight value of a path, and an initial forwarding weight value of the non-shortest path is 0;
for each software forwarding table entry with a forwarding weight value other than 0, making N copies of information in the software forwarding table entry other than the forwarding weight value to obtain N hardware forwarding table entries, and issuing the N hardware forwarding table entries to a hardware resource to obtain the hardware forwarding table;
wherein N=the forwarding weight value of the software forwarding table entry * a preset number of table entries of the hardware forwarding table /a sum value of forwarding weight values included in the software forwarding table entries.

In a possible implementation, the multipath group forwarding table includes a routing type marker; the machine executable instructions further cause the processor to execute the following blocks:
acquiring a preset routing strategy corresponding to the routing type marker; wherein the preset routing strategy at least includes one of the following strategies: adjusting a forwarding load of a congested outbound interface to 0, reducing a forwarding load of a congested outbound interface without increasing a forwarding load of the non-shortest path, reducing a forwarding load of a congested outbound interface with increasing a forwarding load of the non-shortest path.

In a possible implementation, the first network device stores a first interface state table and a second interface state table corresponding to the multipath group forwarding table, the first interface state table includes an interface state of each outbound interface of the first network device, and the second interface state table includes a bandwidth usage of a traffic carried by each path in the first multipath group for the outbound interface;
the machine executable instructions further cause the processor to execute the following blocks:
in response to determining that the interface state of the first interface in the first interface state table changes to a congested state, acquiring a first bandwidth usage of the traffic carried by the shortest path for the first outbound interface from the second interface state table;
in response to determining that the first bandwidth usage meets a preset congestion condition, determining that the traffic carried by the shortest path causes congestion on the first outbound interface.

In a possible implementation, the first interface state table further includes a bandwidth usage and a buffer usage of each outbound interface; the machine executable instructions further cause the processor to execute the following blocks:
for each outbound interface in the first interface state table, updating the bandwidth usage and the buffer usage of the outbound interface every preset duration;
in response to determining that an updated bandwidth usage of the outbound interface reaches a preset bandwidth threshold, or in response to determining that an updated buffer usage of the outbound interface reaches a preset buffer threshold, setting the interface state of the outbound interface to the congested state.

In a possible implementation, the machine executable instructions further cause the processor to execute the following blocks:
adjusting the forwarding weight value of each path in the first multipath group based on the preset routing strategy and a bandwidth usage of each outbound interface included in the second interface state table.

In a possible implementation, multiple paths between the first network device and a third network device form a second multipath group, and in a case where the first multipath group is the same as the second multipath group, the first multipath group and the second multipath group share the multipath group forwarding table.

In a fourth aspect, an example of the present application provides a machine readable storage medium storing machine executable instructions which, when called and executed by a processor, cause the processor to implement the method of any of the first aspect.

In a fifth aspect, an example of the present application provides a computer program product, which causes the processor to implement the method of any of the first aspect.

Using the above technical solution, in response to determining that a traffic carried by the shortest path causes congestion on the first outbound interface, a preset routing strategy corresponding to the multipath group forwarding table is acquired, then the first network device adjusts a forwarding weight value of each path in the first multipath group based on the preset routing strategy corresponding to the multipath group forwarding table. It can be seen that in the example of the present application, when the traffic carried by the shortest path causes congestion on the first outbound interface, the shortest path where the first outbound interface is located is not directly disabled, but the forwarding weight value of each path in the first multipath group is adjusted. Due to the fact that the forwarding weight value of each path is used to indicate, when selecting the path from the first multipath group for packet forwarding, a traffic ratio carried by the path, after adjusting the forwarding weight value of each path, the forwarding load of each path may change, which can reduce the load on the shortest path, thereby alleviating congestion on the first outbound interface, fully utilizing the resource of each of paths, and improving the overall bandwidth utilization of the network.

### Brief Description of the Drawings

The drawings described herein are used to provide further understanding of the present application, and form a part of the present application. The schematic examples and description herein are used to explain the present application and do not constitute improper limitations to the present application.
FIG. 1 is a schematic diagram of a structure of a network architecture according to an example of the present application;
FIG. 2 is a flow diagram of a method for maintaining routing information according to an example of the present application;
FIG. 3a is an exemplary schematic diagram of a first software forwarding table according to an example of the present application;
FIG. 3b is an exemplary schematic diagram of a first hardware forwarding table according to an example of the present application;
FIG. 4a is an exemplary schematic diagram of a second software forwarding table according to an example of the present application;
FIG. 4b is an exemplary schematic diagram of a second hardware forwarding table according to an example of the present application;
FIG. 5a is an exemplary schematic diagram of a third software forwarding table according to an example of the present application;
FIG. 5b is an exemplary schematic diagram of a third hardware forwarding table according to an example of the present application;
FIG. 6 is a schematic diagram of a structure of another network architecture according to an example of the present application;
FIG. 7a is an exemplary schematic diagram of a fourth software forwarding table according to an example of the present application;
FIG. 7b is an exemplary schematic diagram of a fourth hardware forwarding table according to an example of the present application;
FIG. 8 is a schematic diagram of a structure of yet a network structure according to an example of the present application;
FIG. 9a is an exemplary schematic diagram of a fifth software forwarding table according to an example of the present application;
FIG. 9b is an exemplary schematic diagram of a fifth hardware forwarding table according to an example of the present application;
FIG. 10 is a schematic diagram of a structure of an apparatus for maintaining routing information according to an example of the present application;
FIG. 11 is a schematic diagram of a structure of a network device according to an example of the present application.

### Detailed Description

In order to make objectives, technical solutions and advantages of the present application more apparent, the present application now will be described in detail with reference to the accompanying drawings and the detailed description. Obviously, the examples described are only some of the examples of the present application instead of all the examples. All further examples obtained by those of ordinary skills in the art based on the examples herein are within the scope of the present application.

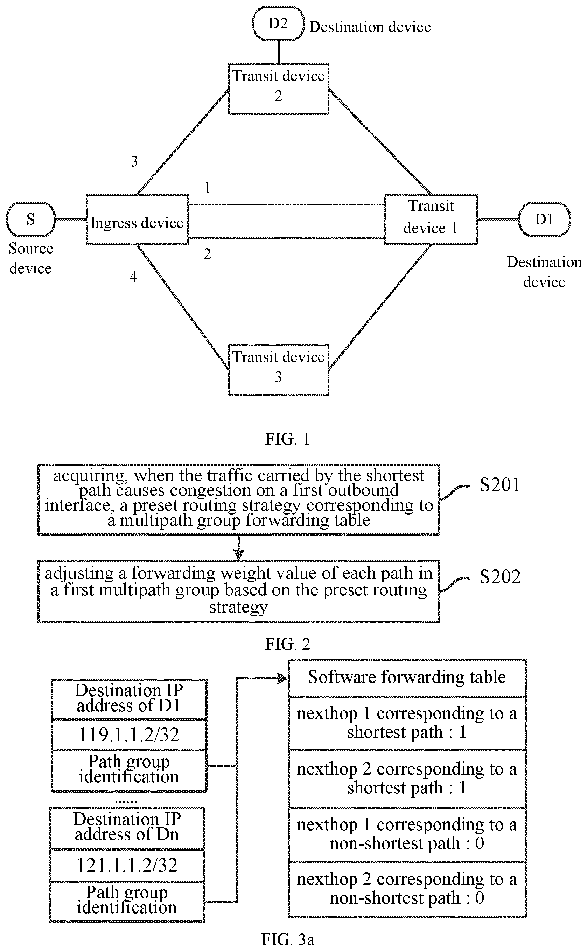

As shown in FIG. 1, which illustrates an exemplary network architecture in which an example of the present application is applied, the network architecture includes: a source device, a destination device, an ingress device, a transit device 1, a transit device 2, and a transit device 3. In FIG. 1, S represents the source device, D1 and D2 represent the destination devices. After receiving a packet sent by the source device, the ingress device can forward the packet to the destination device through a transit device. The source device and the destination device can be servers, virtual machines, and other apparatuses.

The ingress device and the transit device can calculate a shortest path and a loop-free and non-shortest path between a destination IP address or a destination IP subnet based on a shortest path precedence algorithm. Taking the ingress device as an example, the ingress device can calculate the shortest path and the loop-free and non-shortest path to D1. Wherein, the path from outbound interface 1 to D1 and the path from outbound interface 2 to D1 are the shortest paths, while the path from outbound interface 3 to D1 and the path from outbound interface 4 to D1 are loop-free and non-shortest paths.

The loop-free and non-shortest path means that there is no loop in the non-shortest path, and each of the non-shortest paths introduced in subsequent examples of the present application does not have a loop.

In order to improve the bandwidth utilization of the network, the example of the present application provides a method for maintaining routing information, which can be applied to Internet Protocol version 4 (IPv4), Internet Protocol version 6 (IPv6), or Segment Routing IPv6 (SRv6) networks, and specifically used in a campus network, a data center network and a wide area network. The method can be executed by a first network device, which, as an example, can be an ingress device or a transfer device as shown in FIG. 1.

The first network device includes a multipath group forwarding table, which includes a forwarding table entry of each path in a first multipath group, the first multipath group corresponding to the multipath group forwarding table includes a shortest path and a non-shortest path, and the forwarding table entry for the shortest path include a first outbound interface of the first network device.

Each path is used to indicate a path between the first network device and the second network device. It can be understood that each path is used to indicate a path to the same destination IP address or the same destination IP subnet. The destination IP address is the IP address of the second network device, and the destination IP subnet is the IP subnet where the IP address of the second network device is located.

The multipath group forwarding table is used to guide packet forwarding, and each forwarding table entry in the multipath group forwarding table includes the nexthop, the outbound interface, and forwarding weight values of the path corresponding to the forwarding table entry.

It should be noted that the multipath group forwarding table in the example of the present application is located in an overall forwarding table, which can include multiple multipath group forwarding tables. In other words, each multipath group forwarding table can serve as one table entry for the overall forwarding table.

As shown in FIG. 2, the method for maintaining routing information provided in the example of the present application includes the following blocks:
S201, acquiring, in response to determining that a traffic carried by the shortest path causes congestion on the first outbound interface, a preset routing strategy corresponding to the multipath group forwarding table.

It can be understood that the first outbound interface is the outbound interface included in the forwarding table entry for the shortest path in the multipath group forwarding table mentioned above. The first outbound interface may also be located in other paths, that is, multiple paths can share the forwarding traffic of the first outbound interface.

When the first outbound interface is congested and the traffic carried by the shortest path causes congestion on the first outbound interface, it indicates that the forwarding load of the shortest path is relatively high, and a preset routing strategy corresponding to the multipath group forwarding table can be acquired to adjust the forwarding loads of multiple paths.

S202, adjusting a forwarding weight value of each path in a first multipath group based on the preset routing strategy.

The forwarding weight value of each path is used to indicate, when selecting the path from the first multipath group for packet forwarding, a traffic ratio carried by the path. It can be understood that the higher the forwarding weight value of a path, the greater the traffic ratio carried by the path when forwarding packets using the path, which means that the path will be used to forward more packets.

Using the above method, in response to determining that a traffic carried by the shortest path causes congestion on the first outbound interface, a preset routing strategy corresponding to the multipath group forwarding table is acquired, then the first network device adjusts a forwarding weight value of each path in the first multipath group based on the preset routing strategy corresponding to the multipath group forwarding table. It can be seen that in the example of the present application, when the traffic carried by the shortest path causes congestion on the first outbound interface, the shortest path where the first outbound interface is located is not directly disabled, but the forwarding weight value of each path in the first multipath group is adjusted. Due to the fact that the forwarding weight value of each path is used to represent, when selecting the path from the first multipath group for packet forwarding, a traffic ratio carried by the path, after adjusting the forwarding weight value of each path, the forwarding load of each path may change, which can reduce the load on the shortest path, thereby alleviating congestion on the first outbound interface, fully utilizing the resource of each of paths, and improving the overall bandwidth utilization of the network.

It should be noted that multiple paths between the first network device and the third network device form a second multipath group, in the case where the first multipath group is the same as the second multipath group, the first multipath group and the second multipath group share the multipath group forwarding table described above.

It can be understood that in response to determining that multiple multipath groups of the first network device are the same, then the multiple multipath groups can all share the same multipath group forwarding table. This eliminates the need to create and store a multipath group forwarding table for each multipath group separately, which can save storage resources. And more importantly, it can improve the path update speed. In response to determining that it is necessary to adjust the multipath group forwarding tables corresponding to multiple multipath groups, it can directly adjust the shared multipath group forwarding table without adjusting multiple multipath group forwarding tables separately, which can improve the update speed of the multipath group forwarding table and reduce processing costs.

For example, the path from the first network device to the destination device 1 includes: shortest path A, non-shortest path B, and non-shortest path C; the path from the first network device to the destination device 2 includes: shortest path A, non-shortest path B, and non-shortest path C. The path from the first network device to the destination device 1 is the same as the path from the first network device to the destination device 2. In this case, the IP address of the destination device 1 and the IP address of the destination device 2 can share one multipath group forwarding table.

In the example of the present application, the multipath group forwarding table includes a software forwarding table and a hardware forwarding table; before executing the process in FIG. 2, a multipath forwarding table and a hardware forwarding table have been generated in the first network device.

The software forwarding table and hardware forwarding table are generated through the following blocks.

Block 1: calculating a shortest path and a non-shortest path to the second network device.

The first network device can calculate the shortest path and the non-shortest path between the first network device and the second network device based on a shortest path precedence algorithm.

Specifically, the destination IP address or the destination IP subnet of the first network device can be acquired, and then the shortest path and the non-shortest path between the first network device and the destination IP address can be calculated, or the shortest path and the non-shortest path between the first network device and the destination IP subnet can be calculated.

The number of the shortest paths between the first network device and the second network device is at least one, and the number of the non-shortest paths can be 0 to many. In the case that there is no non-shortest path and there are multiple shortest paths, the multiple shortest paths included in the first multipath group are Equal-cost multi-path routing (ECMP).

Block 2: generating a software forwarding table entry for each shortest path and each non-shortest path to obtain the software forwarding table, wherein each software forwarding table entry includes a forwarding weight value of a path, and an initial forwarding weight value of a non-shortest path is 0.

It can be understood that the software forwarding table includes the shortest path and the non-shortest path calculated in block 1. The first network device can prioritize using the shortest path for packet forwarding. In the absence of congestion on the shortest path, the non-shortest path can be omitted for packet forwarding. Therefore, the initial weight value of the shortest path can be 1, and the initial weight value of the non-shortest path can be 0.

As shown in FIG. 3a, which illustrates an exemplary software forwarding table shared by n destination IP addresses. On the left side of FIG. 3a are n destination IP addresses and corresponding path group identifications, which are the destination IP addresses and corresponding path group identifications of the destination devices D1 to Dn, respectively.

For example, the destination IP address of D1 is 119.1.1.2/32, and the destination IP address of Dn is 121.1.1.2/32. Assuming that each path groups between the first network device and respective destination device in FIG. 3a includes two shortest paths and two non-shortest paths.

On the right side of FIG. 3a is the software forwarding table shared by the destination IP addresses of the destination devices D1 to Dn. As an example, the software forwarding table includes four software forwarding table entries.

The first software forwarding table entry includes nexthop 1 corresponding to a shortest path, and the forwarding weight value 1 of the shortest path.

The second software forwarding table entry includes nexthop 2 corresponding to another shortest path, and the forwarding weight value 1 of the shortest path.

The third software forwarding table entry includes nexthop 1 corresponding to a non-shortest path, and the forwarding weight value 0 of the non-shortest path.

The fourth software forwarding table entry includes nexthop 2 corresponding to another non-shortest path, and the forwarding weight value 0 of the non-shortest path.

It should be noted that each software forwarding table entry in FIG. 3a also includes an outbound interface, which is not shown in FIG. 3a.

Block 3, for each software forwarding table entry with a forwarding weight value other than 0, making N copies of information in the software forwarding table entry other than the forwarding weight value to obtain N hardware forwarding table entries, and issuing the N hardware forwarding table entries to a hardware resource to obtain the hardware forwarding table.

Wherein N=the forwarding weight value of the software forwarding table entry * a preset number of table entries of the hardware forwarding table /a sum value of forwarding weight values included in the software forwarding table entries.

The preset number of table entries can be set according to experience, for example, the preset number of table entries can be 128.

It can be understood that after the first network device issues the hardware forwarding table entries to the hardware resource and obtains the hardware forwarding table, the forwarding chip of the first network device can use the hardware forwarding table in the hardware resource to forward the packet.

Wherein, the software forwarding table entry with a forwarding weight value of 0 is currently not used for packet forwarding and is in a standby state. Therefore, there is no need to issue the software forwarding table entry with a forwarding weight value of 0 to the hardware resource.

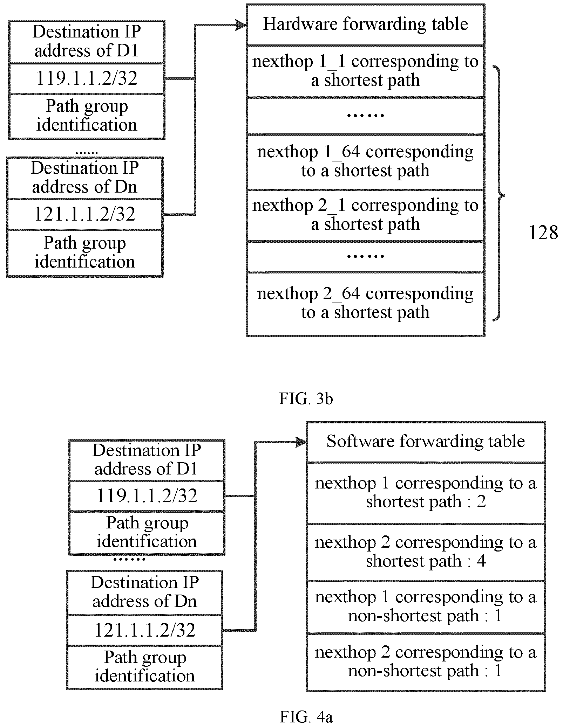

As an example, a hardware forwarding table obtained based on the software forwarding table shown in FIG. 3a is shown in FIG. 3b. The IP address on the left side of FIG. 3b is the same as the IP address on the left side of FIG. 3a, and will not be repeated here.

In FIG. 3b, taking the preset number of table entries in the hardware forwarding table to be 128 as an example, the forwarding weight values of the third and fourth table entries in FIG. 3a are both 0, so there is no need to issue the same to the hardware forwarding table. The forwarding weight values of the first and second software forwarding table entries in FIG. 3a are both 1, which can be copied into 64 copies each and then issued to the hardware forwarding table.

Therefore, the first 64 hardware forwarding table entries included in the hardware forwarding table in FIG. 3b are the same, wherein each forwarding table entry includes nexthop 1 of a shortest path.

Moreover, the last 64 hardware forwarding table entries included in the hardware forwarding table are the same, wherein each forwarding table entry includes nexthop 2 of another shortest path.

It should be noted that each software forwarding table entry in FIG. 3b also includes an outbound interface, which is not shown in FIG. 3b.

It can be understood that in response to determining that the number of table entries in the hardware forwarding table decreases, there may be packet loss caused by the deletion of a hardware forwarding table entry after the packet is matched to a hardware forwarding table entry and before the packet is forwarded. In the example of the present application, the number of table entries included in the hardware forwarding table is a fixed value, that is, a change in the weight of the path will not cause a change in the number of table entries in the hardware forwarding table, which can avoid packet loss.

In another example of the present application, the first network device stores a second interface state table corresponding to the multipath group forwarding table and a first interface state table. Wherein, the first interface state table includes the bandwidth usage, buffer usage, and interface state of each outbound interface of the first network device, and the second outbound interface state table includes a bandwidth usage of the traffic carried by each path in the first multipath group for the outbound interface.

The first outbound interface state table is a comprehensive state of all traffic on each outbound interface in the first network device that has enabled adaptive routing function. As an example, taking the outbound interfaces of the ingress device as outbound interface 1, outbound interface 2, outbound interface 3, and outbound interface 4 in FIG. 1, the first interface state table of the ingress device is shown in Table 1.

**Table 1**

| Outbound interface | Bandwidth usage, in kbps | Buffer usage, in bytes | Interface state |
|---|---|---|---|
| Outbound interface 1 | BW1 | BF1 | Normal state |
| Outbound interface 2 | BW2 | BF2 | Normal state |
| Outbound interface 3 | BW3 | BF3 | Normal state |
| Outbound interface 4 | BW4 | BF4 | Normal state |

The interface state can be a normal state, a congested state, or a restored state, and the initial state of each outbound interface is set to be the normal state.

The first network device can update the bandwidth usage and buffer usage of each outbound interface in the first interface state table every preset duration. In response to determining that the updated bandwidth usage of the outbound interface reaches a preset bandwidth threshold or the updated buffer usage of the outbound interface reaches a preset buffer threshold, the interface state of the outbound interface is set to be the congested state.

For example, the preset duration can be 5 milliseconds.

Wherein the preset bandwidth threshold is a bandwidth high threshold, and the preset buffer threshold is a buffer high threshold.

The method for determining the interface state of the first network device specifically includes:
in response to determining that the bandwidth usage of an interface reaches the bandwidth high threshold or the buffer usage reaches the buffer high threshold, setting the interface state of the interface to be the congested state; in response to determining that the interface changes from normal state or restored state to the congested state, determining, by the first network device, that the interface is congested;
in response to determining that an interface is in the congested state, the updated bandwidth usage of the interface is lower than the bandwidth high threshold and the updated buffer usage is lower than the buffer high threshold, setting the interface state of the interface to be the restored state;
in response to determining that an interface is in the restored state, the updated bandwidth usage of the interface is lower than a bandwidth low threshold and the updated buffer usage is lower than a buffer low threshold, setting the interface state of the interface to be the normal state.

The above bandwidth high threshold, bandwidth low threshold, buffer high threshold, and buffer low threshold are preset statically based on experience.

Alternatively, artificial intelligence can be used to intelligently and dynamically set the bandwidth high threshold, the bandwidth low threshold, the buffer high threshold, and the buffer low threshold based on network state.

For example, a deep learning model can be pre-trained and a threshold update period can be preset. The bandwidth usage and buffer usage of each outbound interface can be input into the deep learning model every one threshold update period, so as to acquire an updated bandwidth high threshold, bandwidth low threshold, buffer high threshold, and buffer low threshold output by the deep model.

And the first network device stores a second interface state table, which includes the bandwidth usage of each outbound interface corresponding to the multipath group forwarding table. As an example, the outbound interfaces included in the multipath group forwarding table 1 are outbound interfaces 1, 2, 3, and 4, respectively. The outbound interfaces included in the multipath group forwarding table 2 are outbound interfaces 1, and 3, respectively. The outbound interfaces included in the multipath group forwarding table 3 are outbound interfaces 2 and 4, respectively. The second interface state table stored in the first network device is shown in Table 2.

**Table 2**

| Outbound interface | Multipath group forwarding table 1 (Path type: bandwidth usage) | Multipath group forwarding table 2 (Path type: bandwidth usage) | Multipath group forwarding table 3 (Path type: bandwidth usage) |
|---|---|---|---|
| Outbound interface 1 | M:a | N:e | |
| Outbound interface 2 | M:b | | N:h |
| Outbound interface 3 | N:c | M:f | |
| Outbound interface 4 | M:d | | M:g |

In Table 2, M indicates the shortest path and N indicates the non-shortest path; the number after ":" indicates the bandwidth usage of the traffic carried by the path for the outbound interface.

From Table 2, it can be seen that the multipath group forwarding table 1 includes three shortest paths and one non-shortest path. Wherein the three shortest paths are shortest path 1, shortest path 2, and shortest path 3. The bandwidth usage of the traffic carried by shortest path 1 for the outbound interface 1 is a; the bandwidth usage of the traffic carried by shortest path 2 for the outbound interface 2 is b; the bandwidth usage of the traffic carried by shortest path 3 for the outbound interface 4 is d; the bandwidth usage of the traffic carried by the non-shortest path for the outbound interface 3 is c.

The multipath group forwarding table 2 includes one shortest path and one non-shortest path. The bandwidth usage of the shortest path on the outbound interface 3 is f; and the bandwidth usage of the non-shortest path on outbound interface 1 is e.

The multipath group forwarding table 3 includes one shortest path and one non-shortest path. The bandwidth usage of the shortest path on the outbound interface 4 is g; and the bandwidth usage of the non-shortest path on outbound interface 2 is h.

In above S201, in response to determining that a traffic carried by the shortest path causes congestion on the first outbound interface, before acquiring a preset routing strategy corresponding to the multipath group forwarding table, the method further includes:
in response to determining that the interface state of the first interface in the first interface state table changes to the congested state, acquiring a first bandwidth usage of the traffic carried by the shortest path for the first outbound interface from the second interface state table, and determining whether the first bandwidth usage meets a preset congestion condition.

Wherein the preset congestion condition can be that: among the bandwidth usages of paths using the first outbound interface, the first bandwidth usage is the largest.

That is to say, in response to determining that bandwidth usage of the shortest path where the first outbound interface is located for the first outbound interface is the largest, it indicates that the traffic carried by the shortest path causes congestion on the first outbound interface.

Alternatively, the preset congestion condition can also be that the second bandwidth usage is greater than a specified bandwidth threshold, which is less than the bandwidth high threshold mentioned above.

The explanation is made in conjunction with specific examples in the following, assuming that the maximum bandwidth of each outbound interface is 1000kbps and the maximum buffer usage is 1000 bytes; the bandwidth high threshold is 800kbps, the bandwidth low threshold is 200 kbps, the buffer high threshold is 800 bytes, and the buffer low threshold is 200 bytes.

As an example, taking the outbound interfaces of the ingress device as outbound interface 1, outbound interface 2, outbound interface 3, and outbound interface 4 in FIG. 1, the first interface state table of the ingress device is shown in Table 3.

**Table 3**

| Outbound interface | Bandwidth usage, in kbps | Buffer usage, in bytes | Interface state |
|---|---|---|---|
| Outbound interface 1 | 600 | 800 | Congested state |
| Outbound interface 2 | 600 | 500 | Normal state |
| Outbound interface 3 | 400 | 200 | Normal state |
| Outbound interface 4 | 300 | 400 | Normal state |

According to Table 3, in response to determining that outbound interface 1 in Table 3 is set to be the congested state, the ingress device determines that the outbound interface 1 enters the congested state.

Assuming that the ingress device includes multipath group forwarding table 1, multipath group forwarding table 2, and multipath group forwarding table 3, the outbound interfaces included in the multipath group forwarding table 1 are outbound interfaces 1, 2, 3, and 4, respectively; the outbound interfaces included in the multipath group forwarding table 2 are outbound interfaces 1, and 3, respectively; the outbound interfaces included in the multipath group forwarding table 3 are outbound interfaces 2 and 4, respectively; then the second interface state table corresponding to the multipath group forwarding table stored in the first network device is shown in Table 4.

**Table 4**

| Outbound interface | Multipath group forwarding table 1 | Multipath group forwarding table 2 | Multipath group forwarding table 3 |
|---|---|---|---|
| Outbound interface 1 | M:600 | N:0 | |
| Outbound interface 2 | M:600 | | N:0 |
| Outbound interface 3 | N:0 | M:400 | |
| Outbound interface 4 | N:0 | | M:300 |

From Table 4, it can be seen that regarding the outbound interface 1, the bandwidth usage of the traffic carried by the shortest path corresponding to the multipath group forwarding table 1 for the outbound interface 1 is the largest, therefore, it can be determined that the traffic carried by the shortest path causes congestion on the outbound interface 1.

By using this method, based on the first interface state table, it is possible to determine in a timely manner whether the first outbound interface is congested. In the case of determining the congestion on the first outbound interface, it is also possible to determine a path that causes the congestion on the first outbound interface, thereby adjusting the weight value of each of paths corresponding to the multipath forwarding table corresponding to this path, which can avoid congestion deterioration and improve bandwidth utilization.

In another example of the present application, the multipath group forwarding table includes a routing type marker. As an example, the routing type marker can occupy a field in the software forwarding table.

In S201 above, acquiring a preset routing strategy corresponding to the multipath group forwarding table can be implemented as follows:
acquiring a preset routing strategy corresponding to the routing type marker; wherein the preset routing strategy at least includes one of the following strategies: adjusting a forwarding load of a congested outbound interface to 0, reducing the forwarding load of the congested outbound interface without increasing the forwarding load of the non-shortest path, reducing the forwarding load of the congested outbound interface with increasing the forwarding load of the non-shortest path.

As an example, the preset routing strategy corresponding to the routing type marker 1 is: adjusting the forwarding load of the congested outbound interface to 0, which means that the congested outbound interface is not continued to be used to forward a packet; the preset routing strategy corresponding to the routing type marker 2 is: reducing the forwarding load of the congested outbound interface without increasing the forwarding load of the non-shortest path; the preset routing strategy corresponding to the routing type marker 3 is: reducing the forwarding load of the congested outbound interface with increasing the forwarding load of the non-shortest path. The examples of the present application do not limit the form of routing type marker.

It should be noted that the preset routing strategy in the example of the present application is not limited to the above three types, and can be flexibly set according to actual scenarios.

By using the above method, the preset routing strategy corresponding to the routing type marker can be matched by setting the routing type marker in the multipath group forwarding table. In this way, the preset routing strategy used for multipath group forwarding table entry can be flexibly adjusted through the routing type marker, so as to improve overall network performance.

After determining the preset routing strategy, S202, adjusting a forwarding weight value of each path in the first multipath group based on the preset routing strategy, specifically includes:
adjusting a forwarding weight value of each path in the first multipath group based on the preset routing strategy and the bandwidth usage of each interface included in the second interface state table.

Wherein the first network device can determine the path of which the forwarding weight value needs to be adjusted based on the preset routing strategy.

In response to determining that the preset routing strategy is adjusting the forwarding load of the congested outbound interface to 0, the forwarding weight value of the congested outbound interface can be adjusted to 0, and the path load of the non-congested outbound interface in the first multipath group can be used to split the traffic of the shortest path where the first outbound interface is located.

In response to determining that the preset routing strategy is reducing the forwarding load of the congested outbound interface without increasing the forwarding load of the non-shortest path, then it can be calculated according to multiple preset ratios respectively whether congestion occurs on each of the outbound interfaces of other shortest paths after the traffic of the shortest path where the first outbound interface is located is evenly distributed to the shortest paths of which the outbound interfaces are not congested. In this way, the maximum preset ratio that will not cause congestion on the outbound interfaces of other shortest paths can be determined, so as to adjust the forwarding weight value of each shortest path according to this preset ratio. Wherein, multiple preset ratios refer to multiple ratios that are sequentially reduced, for example, the multiple preset ratios can include 1/2, 1/4, and 1/8.

Assuming that after calculation, it is determined that after adjusting 1/2 of traffic carried by the shortest path where the first outbound interface is located to other shortest paths, congestion will not occur on the outbound interfaces of other shortest paths, the forwarding weight value of each shortest path will be adjusted according to the ratio of 1/2.

In response to determining that the preset routing strategy is reducing the forwarding load of the congested outbound interface with increasing the forwarding load of the non-shortest path, then it can be calculated according to multiple preset ratios respectively whether congestion occurs on each of the outbound interfaces of other non-shortest paths after the traffic of the shortest path where the first outbound interface is located is evenly distributed to the non-shortest paths of which the outbound interfaces are not congested. In this way, the maximum preset ratio that will not cause congestion on the outbound interfaces of other non-shortest paths can be determined, so as to adjust the forwarding weight value of each path according to this preset ratio.

Combining with the example in Table 4 above, assuming that the preset routing strategy is reducing the forwarding load of the congested outbound interface with increasing the forwarding load of the non-shortest path, then the forwarding weight value of each path in the multipath group corresponding to the multipath group forwarding table 1 can be adjusted.

For the convenience of description, the four paths corresponding to the multipath group forwarding table entry 1 in Table 4 are called path 1, path 2, path 3, and path 4, respectively. According to Table 3, it can be determined that both the outbound interfaces 3 and 4 of the non-shortest path are not congested, then it can be calculated whether congestion occurs on each of the outbound interfaces 3 and 4 after 1/2 of the traffic on the outbound interface 1 of the path 1 is evenly distributed to the outbound interface 3 of the path 3 and the outbound interface 4 of the path 4. In response to determining that congestion does not occur on each of the outbound interfaces 3 and 4, then the forwarding weight values corresponding to paths 1 to 4 can be re-determined according to the ratio of 1/2.

The calculated bandwidth usage of each outbound interface is shown in Table 5, which shows that the traffic of 300kbps in the outbound interface 1 is evenly distributed to the outbound interface 3 and the outbound interface 4. It can be seen that the adjusted bandwidth usage of the outbound interface 3 is 550kbps, and the adjusted bandwidth usage of the outbound interface 4 is 450kbps, both of which do not exceed a bandwidth high threshold and will not cause congestion.

**Table 5**

| Outbound interface | Bandwidth usage, in kbps |
|---|---|
| Outbound interface 1 | 600-300 = 300 |
| Outbound interface 2 | 600 |
| Outbound interface 3 | 400+150 = 550 |
| Outbound interface 4 | 300+150 = 450 |

Assuming that congestion occurs on any one of the outbound interfaces 2, 3, and 4, then it can be calculated whether congestion occurs on each of the outbound interfaces 2, 3 and 4 after 1/4 of the traffic on the outbound interface 1 of the path 1 is evenly distributed to the outbound interface 3 of the path 2, the outbound interface 3 of the path 3 and the outbound interface 4 of the path 4. In response to determining that congestion does not occur on each of the outbound interfaces 2, 3 and 4, then the forwarding weight values corresponding to paths 1 to 4 can be re-determined according to the ratio of 1/4. In response to determining that it is calculated that congestion may occurs on any one of the outbound interfaces, then continue to calculate according to 1/8, and so on.

According to the example in Table 5, in response to determining that the forwarding weight values corresponding to paths 1 to 4 can be re-determined in a ratio of 1/2, then the forwarding weight values included in the four software forwarding table entries in the multipath group forwarding table 1 are adjusted from 1, 1, 0, 0 to 1/2, 1, 1/4, 1/4, that is, 2, 4, 1, 1.

The following is a method for updating the software forwarding table and the hardware forwarding table.

In an example, it is assumed that the preset routing strategy is reducing the forwarding load of the congested outbound interface with increasing the forwarding load of the non-shortest path. Based on FIG. 3a, the forwarding weight values included in the four software forwarding table entries can be adjusted from 1, 1, 0, 0 to 2, 4, 1, 1. After adjustment, as shown in FIG. 4a, half of the traffic on the path corresponding to the first software forwarding table entry can be evenly distributed to two non-shortest paths.

As an example, taking the 1000 packets forwarded by the first network device as an example, before adjusting the forwarding weight value, the number of packets forwarded by the outbound interface 1 is 1000 * 1/2=500, the number of packets forwarded by the outbound interface 2 is 1000 * 1/2=500, and the number of packets forwarded by the outbound interface 3 and the outbound interface 4 are both 0. After adjusting the forwarding weight value, the number of packets forwarded by the outbound interface 1 is 1000 * 2/(2+4+1+1) = 250, the number of packets forwarded by the outbound interface 2 is 1000 * 4/(2+4+1+1) = 500, the number of packets forwarded by the outbound interface 3 is 1000 * 1/(2+4+1+1) = 125 and the number of packets forwarded by the outbound interface 4 is 1000 * 1/(2+4+1+1) = 125. That is, half of the traffic on the outbound interface 1 is evenly distributed to the outbound interfaces 3 and 4.

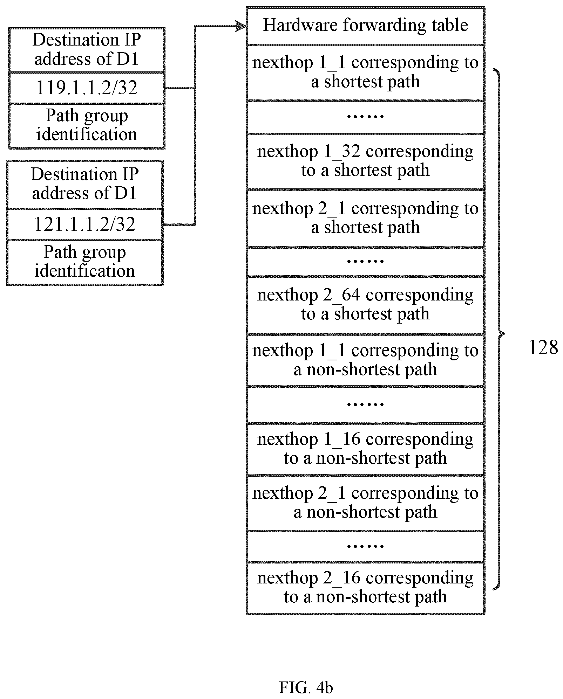

After obtaining the software forwarding table entries in FIG. 4a, it is necessary to adapt to update the hardware forwarding table, and the updated hardware forwarding table is shown in FIG. 4b.

Wherein the number of table entries that need to be copied for each software forwarding table entry is as follows.
The number of the first copied software forwarding table entry is: 2 * 128/(2+4+1+1) = 32;
The number of the second copied software forwarding table entry is: 4 * 128/(2+4+1+1) = 64;
The number of the third copied software forwarding table entry is: 1 * 128/(2+4+1+1) = 16;
The number of the fourth copied software forwarding table entry is: 1 * 128/(2+4+1+1) = 16;
After completing the copy, the fields in each software forwarding table other than the forwarding weight value can be issued to the hardware forwarding table, so as to obtain the hardware forwarding table as shown in FIG. 4b.

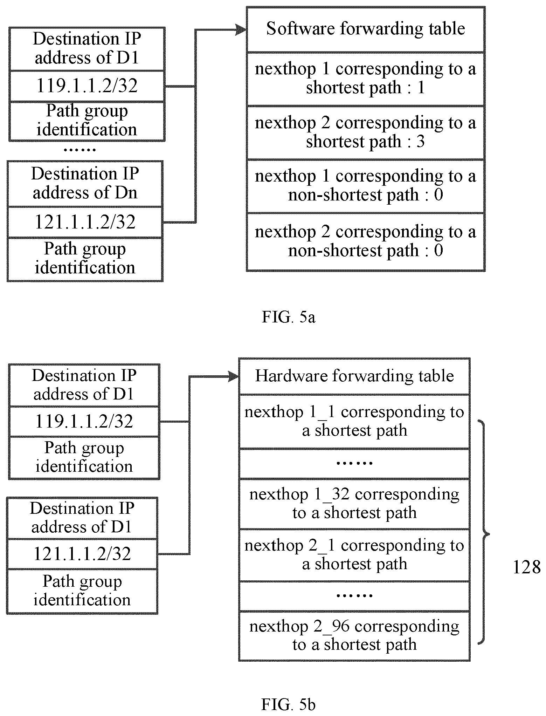

In another example, assuming that the preset routing strategy is reducing the forwarding load of the congested outbound interface without increasing the forwarding load of the non-shortest path. On the basis of FIG. 3a, the forwarding weight values included in the four software forwarding table entries can be adjusted from 1, 1, 0, 0 to 1, 3, 0, 0. After adjustment, as shown in FIG. 5a,, half of the traffic on one shortest path can be evenly distributed to another shortest path.

Taking the 1000 packets forwarded by the first network device as an example, before adjusting the forwarding weight value, the number of packets forwarded by the outbound interface 1 is 1000 * 1/2=500, the number of packets forwarded by the outbound interface 2 is 1000 * 1/2=500. After adjusting the forwarding weight value, the number of packets forwarded by the outbound interface 1 is 1000 * 1/(1+3) = 250, the number of packets forwarded by the outbound interface 2 is 1000 * 3/(1+3) = 750, the number of packets forwarded by the outbound interface 3 is 0, and the number of packets forwarded by the outbound interface 4 is 0. That is, half of the packets on the outbound interface 1 is distributed to the outbound interface 2.

After obtaining the software forwarding table entries in FIG. 5a, it is necessary to adapt to update the hardware forwarding table, and the updated hardware forwarding table is shown in FIG. 5b.

Wherein the number of table entries that need to be copied for each software forwarding table entry is as follows.
The number of the first copied software forwarding table entry is: 1 * 128/(1+3+0+0) = 32;
The number of the second copied software forwarding table entry is: 3 * 128/(1+3+0+0) = 96;
The number of the third copied software forwarding table entry is: 0 * 128/(1+3+0+0) = 0;
The number of the fourth copied software forwarding table entry is: 0 * 128/(1+3+0+0) = 0;
After completing the copy, the fields in each software forwarding table other than the forwarding weight value can be issued to the hardware forwarding table, so as to obtain the hardware forwarding table as shown in FIG. 5b.

Using the above method, in response to determining that the first outbound interface is congested, the first network device can adjust the forwarding weight value of the path corresponding to each forwarding table entry based on the preset routing strategy corresponding to the multipath group forwarding table. That is, the first network device can use the paths corresponding to other forwarding table entries to split the packets that originally need to be forwarded through the first outbound interface, thereby reducing the load pressure on the first outbound interface. By fully utilizing other paths in the network to forward packets, bandwidth utilization is improved. While supporting large-scale network, it can meet the requirements of high throughput, low latency, and low cost.

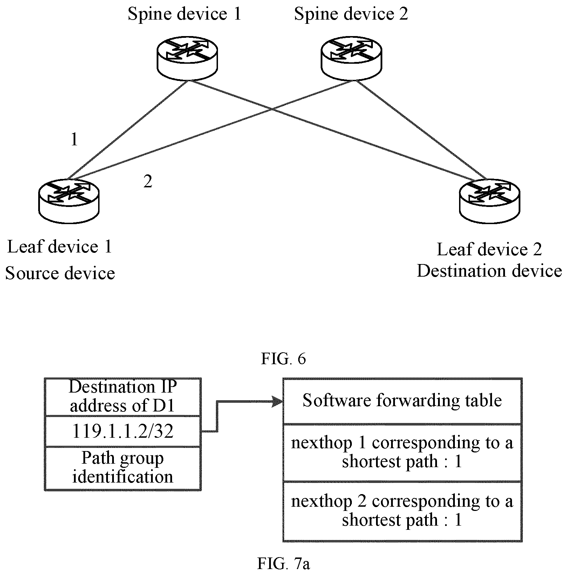

The method provided in the example of the present application can also be applied to a Leaf-Spine topology network architecture, as shown in FIG. 6, which illustrates two Spine devices and two Leaf devices by example. The two Spine devices are Spine device 1 and Spine device 2, and the two Leaf devices are Leaf device 1 and Leaf device 2, respectively.

Wherein Leaf device 1 is the source device, and Leaf device 2 is the destination device. The Leaf device 1 can send a packet to the Leaf device 2. Taking the Leaf device 1 as an example, the Leaf device 1 calculates two paths, i.e., a path from the outbound interface 1 to the Leaf device 2 and a path from the outbound interface 2 to the Leaf device 2, which are both the shortest paths, and are included in the software forwarding table of the Leaf device 1. The above described two shortest paths form an ECMP path. The software forwarding table is shown in FIG. 7a.

FIG. 7a illustrates an exemplary software forwarding table in the Leaf device 1 in the network architecture shown in FIG. 6. On the left side of FIG. 7a is the destination IP address of D1 and the corresponding path group identification. The destination IP address of D1 is the IP address of the Leaf device 2. For example, the destination IP address of D1 is 119.1.1.2/32.

The software forwarding table generated by the Leaf device 1 based on this path group includes two software forwarding table entries. The first software forwarding table entry includes nexthop 1 of a shortest path, and the forwarding weight value 1; the second software forwarding table entry includes nexthop 2 of another shortest path, and the forwarding weight value 1.

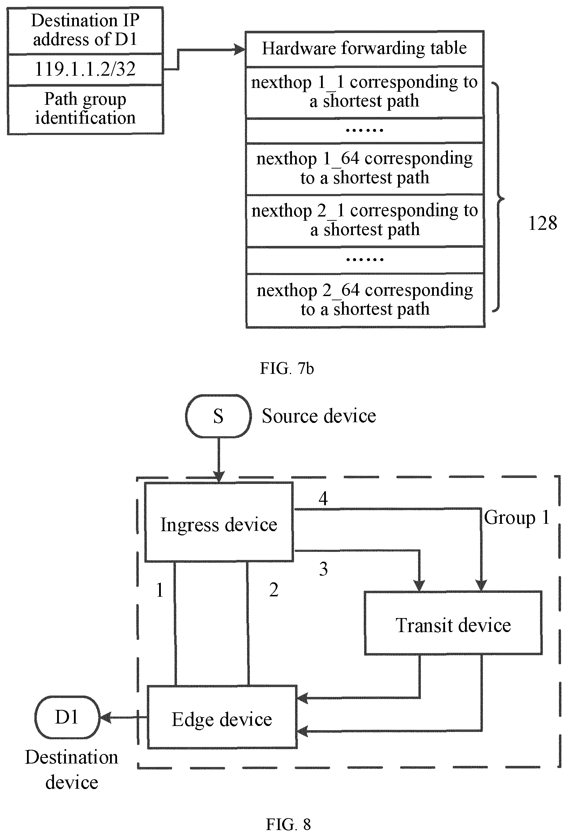

FIG. 7b is the hardware forwarding table corresponding to FIG. 7a. The first 64 hardware forwarding table entries included in the hardware forwarding table in FIG. 7b are the same, and each forwarding table entry includes nexthop 1 of a shortest path.

Moreover, the last 64 hardware forwarding table entries included in the hardware forwarding table are the same, and each forwarding table entry includes nexthop 2 of another shortest path.

The method provided in the example of the present application can also be applied to each group in the Dragonfly topology network architecture. As shown in FIG. 8, the rectangular dashed box in FIG. 8 represents Group 1, which includes an ingress device, a transit device, and an edge device. In FIG. 8, S represents the source device, and D1 represents the destination device. The source device accesses Group 1 through the ingress device, and the destination device accesses Group 1 through the edge device.

Taking the ingress device as an example, the ingress device can calculate the shortest path and non-shortest path to the destination device. The path from the outbound interface 1 to the destination device and the path from the outbound interface 2 to the destination device are shortest paths, while the path from the outbound interface 3 to the destination device and the path from the outbound interface 4 to the destination device are non-shortest paths.

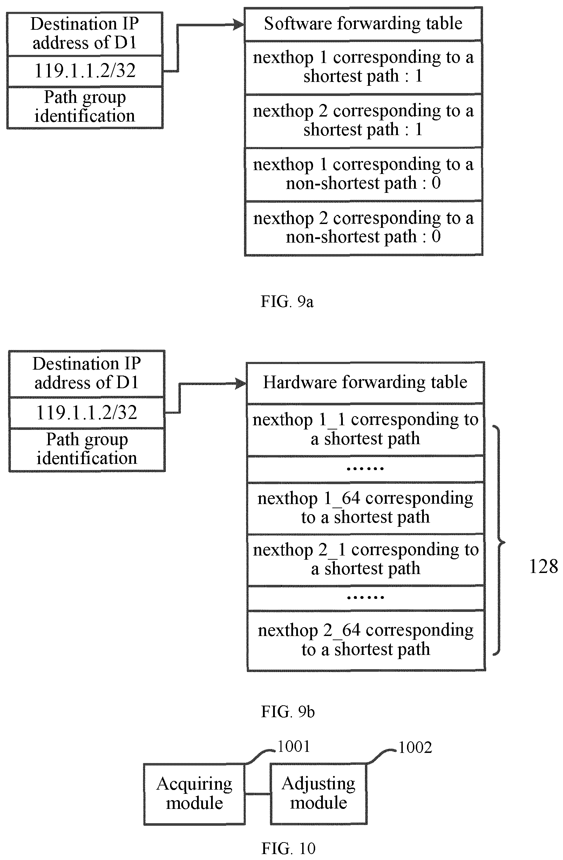

FIG. 9a illustrates an exemplary software forwarding table in the ingress device in the network architecture shown in FIG. 8. Wherein, on the left side of FIG. 9a is the destination IP address of D1 and the corresponding path group identification, and the destination IP address of D1 is the IP address of the destination device. For example, the destination IP address of D1 is 119.1.1.2/32.

In the software forwarding table, the first software forwarding table entry includes nexthop 1 of a shortest path, and the forwarding weight value 1 of the shortest path.

The second software forwarding table entry includes nexthop 2 corresponding to another shortest path, and the forwarding weight value 1 of the shortest path.

The third software forwarding table entry includes nexthop 1 corresponding to a non-shortest path, and the forwarding weight value 0 of the non-shortest path.

The fourth software forwarding table entry includes nexthop 2 corresponding to another non-shortest path, and the forwarding weight value 0 of the non-shortest path.

FIG. 9b is the hardware forwarding table corresponding to FIG. 9a. The first 64 hardware forwarding table entries included in the hardware forwarding table in FIG. 7b are the same, and each forwarding table entry includes nexthop 1 of a shortest path.

Moreover, the last 64 hardware forwarding table entries included in the hardware forwarding table are the same, and each forwarding table entry includes nexthop 2 of another shortest path.

Based on the same concept, an example of the present application provides an apparatus for maintaining routing information, wherein it is applied to a first network device which includes a multipath group forwarding table, and a first multipath group corresponding to the multipath group forwarding table includes a shortest path and a non-shortest path, each path being used to indicate a path between the first network device and the second network device; and wherein a forwarding table entry of the shortest path includes a first outbound interface of the first network device; as shown in FIG. 10, the apparatus includes:
an acquiring module 1001, to acquire, in response to determining that a traffic carried by the shortest path causes congestion on the first outbound interface, a preset routing strategy corresponding to the multipath group forwarding table;
an adjusting module 1002, to adjust a forwarding weight value of each path in the first multipath group based on the preset routing strategy, wherein the forwarding weight value of each path is used to represent, when selecting the path from the first multipath group for packet forwarding, a traffic ratio carried by the path.

Optionally, the multipath group forwarding table includes a software forwarding table and a hardware forwarding table; the apparatus further includes a generating module, wherein,
the generating module is to:
calculate a shortest path and a non-shortest path to the second network device;
generate a software forwarding table entry for each shortest path and each non-shortest path to obtain the software forwarding table, wherein each software forwarding table entry includes a forwarding weight value of a path, and an initial forwarding weight value of the non-shortest path is 0;
for each software forwarding table entry with a forwarding weight value other than 0, make N copies of information in the software forwarding table entry other than the forwarding weight value to obtain N hardware forwarding table entries, and issue the N hardware forwarding table entries to a hardware resource to obtain the hardware forwarding table;
wherein N=the forwarding weight value of the software forwarding table entry * a preset number of table entries of the hardware forwarding table /a sum value of forwarding weight values included in the software forwarding table entries.

Optionally, the multipath group forwarding table includes routing type markers; the acquiring module 1001 is specifically to:
acquire a preset routing strategy corresponding to the routing type marker; wherein the preset routing strategy at least includes one of the following strategies: adjusting a forwarding load of a congested outbound interface to 0, reducing the forwarding load of the congested outbound interface without increasing the forwarding load of the non-shortest path, reducing the forwarding load of the congested outbound interface with increasing the forwarding load of the non-shortest path.

Optionally, the first network device stores a second interface state table corresponding to the multipath group forwarding table and a first interface state table, wherein, the first interface state table includes the bandwidth usage, buffer usage, and interface state of each outbound interface of the first network device, and the second outbound interface state table includes a bandwidth usage of the traffic carried by each path in the first multipath group for the outbound interface; the apparatus further includes a determining module; wherein
the acquiring module 1001 is further to acquire, in response to determining that the interface state of the first interface in the first interface state table changes to the congested state, a first bandwidth usage of the traffic carried by the shortest path for the first outbound interface from the second interface state table;
the determining module is to determine, in response to determining that the first bandwidth usage meets a preset congestion condition, that the traffic carried by the shortest path causes congestion on the first outbound interface.

Optionally, the first interface state table further includes a bandwidth usage and a buffer usage of each outbound interface; the apparatus further includes an updating module and a setting module;
the updating module is to update, for each outbound interface in the first interface state table, the bandwidth usage and the buffer usage of the outbound interface every preset duration;
the setting module is to set, in response to determining that the updated bandwidth usage of the outbound interface reaches a preset bandwidth threshold, or in response to determining that the updated buffer usage of the outbound interface reaches a preset buffer threshold, the interface state of the outbound interface to be the congested state.

Optionally, the adjusting module 1002 is specifically to:
adjust a forwarding weight value of each path in the first multipath group based on the preset routing strategy and the bandwidth usage of each outbound interface included in the second interface state table.

Optionally, multiple paths between the first network device and the third network device form a second multipath group, in the case where the first multipath group is the same as the second multipath group, the first multipath group and the second multipath group share the multipath group forwarding table.

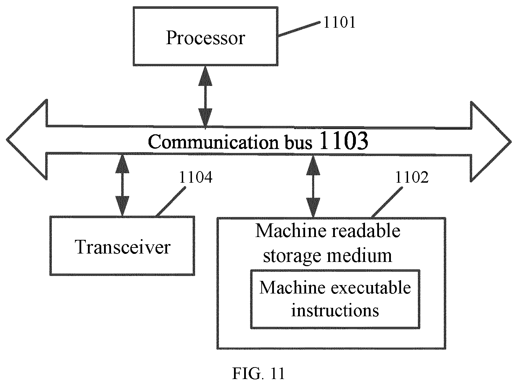

Based on the same concept, an example of the present application further provides a first network device, which includes a multipath group forwarding table, and a first multipath group corresponding to the multipath group forwarding table includes a shortest path and a non-shortest path, each path being used to indicate a path between the first network device and the second network device; and wherein a forwarding table entry of the shortest path includes a first outbound interface of the first network device; as shown in FIG. 11, the first network device includes:
a processor 1101;
a transceiver 1104;
a machine readable storage medium 1102 storing machine executable instructions which can be executed by the processor 1101 to cause the processor 1101 to perform the following blocks:
   in response to determining that a traffic carried by the shortest path causes congestion on the first outbound interface, acquiring a preset routing strategy corresponding to the multipath group forwarding table;
   adjusting a forwarding weight value of each path in the first multipath group based on the preset routing strategy, wherein the forwarding weight value of each path is used to indicate, when selecting the path from the first multipath group for packet forwarding, a traffic ratio carried by the path.

Optionally, the multipath group forwarding table includes a software forwarding table and a hardware forwarding table; the machine executable instructions further cause the processor 1101 to perform the following blocks:
calculating a shortest path and a non-shortest path to the second network device;
generating a software forwarding table entry for each shortest path and each non-shortest path to obtain the software forwarding table, wherein each software forwarding table entry includes a forwarding weight value of a path, and an initial forwarding weight value of the non-shortest path is 0;
for each software forwarding table entry with a forwarding weight value other than 0, making N copies of information in the software forwarding table entry other than the forwarding weight value to obtain N hardware forwarding table entries, and issuing the N hardware forwarding table entries to a hardware resource to obtain the hardware forwarding table;
wherein N=the forwarding weight value of the software forwarding table entry * a preset number of the table entries of the hardware forwarding table /a sum value of forwarding weight values included in the software forwarding table entries.

Optionally, the multipath group forwarding table includes a routing type marker; the machine executable instructions further cause the processor 1101 to perform the following blocks:
acquiring a preset routing strategy corresponding to the routing type marker; wherein the preset routing strategy at least includes one of the following strategies: adjusting a forwarding load of a congested outbound interface to 0, reducing the forwarding load of the congested outbound interface without increasing the forwarding load of the non-shortest path, reducing the forwarding load of the congested outbound interface with increasing the forwarding load of the non-shortest path.

Optionally, the first network device stores a second interface state table corresponding to the multipath group forwarding table and a first interface state table, wherein, the first interface state table includes the bandwidth usage, buffer usage, and interface state of each outbound interface of the first network device, and the second outbound interface state table includes a bandwidth usage of the traffic carried by each path in the first multipath group for the outbound interface;
the machine executable instructions further cause the processor 1101 to perform the following blocks:
in response to determining that the interface state of the first interface in the first interface state table changes to the congested state, acquiring a first bandwidth usage of the traffic carried by the shortest path for the first outbound interface from the second interface state table;
in response to determining that the first bandwidth usage meets a preset congestion condition, determining that the traffic carried by the shortest path causes congestion on the first outbound interface.

Optionally, the first interface state table further includes a bandwidth usage and a buffer usage of each outbound interface; the machine executable instructions further cause the processor 1101 to perform the following blocks:
for each outbound interface in the first interface state table, updating the bandwidth usage and the buffer usage of the outbound interface every preset duration;
in response to determining that the updated bandwidth usage of the outbound interface reaches a preset bandwidth threshold, or in response to determining that the updated buffer usage of the outbound interface reaches a preset buffer threshold, setting the interface state of the outbound interface to the congested state.

Optionally, the machine executable instructions further cause the processor 1101 to perform the following blocks:
adjusting a forwarding weight value of each path in the first multipath group based on the preset routing strategy and the bandwidth usage of each outbound interface included in the second interface state table.

Optionally, multiple paths between the first network device and the third network device form a second multipath group, in the case where the first multipath group is the same as the second multipath group, the first multipath group and the second multipath group share the multipath group forwarding table.

In FIG. 11, it can also include a communication bus 1103. The processor 1101, the machine readable storage medium 1102 and the transceiver 1104 communicate with each other through the communication bus 1103, which can be a Peripheral Component Interconnect (PCI) bus or an Extended Industry Standard Architecture (EISA) bus, etc. The communication bus can be classified into address bus, data bus, control bus, etc.

The transceiver 1104 can be a wireless communication module, which performs data interaction with other devices under the control of the processor 1101.

The machine readable storage medium 1102 may include either Random-Access Memory (RAM) or Non Volatile Memory (NVM), such as at least one disk memory. In addition, the machine-readable storage medium can also be at least one storage device located far from the above described processor.

The processor 1101 can be a general-purpose processor, including a Central Processing Unit (CPU), a Network Processor (NP), etc; it can also be a Digital Signal Processing (DSP), Application Specific Integrated Circuit (ASIC), Field-Programmable Gate Array (FPGA) or other programmable logic devices, discrete gates or transistor logic devices, or discrete hardware components.

Based on the same invention concept, according to the method for maintaining routing information provided in the above example of the present application, an example of the present application also provides a machine readable storage medium, which stores machine executable instructions that can be executed by the processor. The machine executable instructions cause the processor to implement blocks of the above described method for maintaining routing information.

In another example provided by the present application, it is provided a computer program product containing instructions which, when running on a computer, cause the computer to implement the blocks of the method for maintaining routing information in the above examples.

It should be noted that in this article, relational terms such as first and second are only used to distinguish one entity or operation from another entity or operation, and do not necessarily require or imply any actual relationship or order between these entities or operations. Moreover, the terms "include", "comprise" or any other variants thereof are intended to cover non-exclusive inclusions, so that processes, methods, articles or devices comprising a series of elements comprise not only those elements listed but also those not specifically listed or the elements intrinsic to these processes, methods, articles, or devices. Without further limitations, elements defined by the sentences "comprise(s) a." or "include(s) a." do not exclude that there are other identical elements in the processes, methods, articles, or devices which include these elements.

The description is only for preferred examples of the present application, and examples are not so limited. Any modifications, substitutions, improvements, etc., which are made within the spirit and principles of the present application, will fall into the protection scope of the present application.

## Claims

1. A method for maintaining routing information, wherein the method is applied to a first network device which comprises a multipath group forwarding table, a first multipath group corresponding to the multipath group forwarding table comprises a shortest path and a non-shortest path, each path being used to indicate a path between the first network device and a second network device; and wherein a forwarding table entry of the shortest path comprises a first outbound interface of the first network device; the method comprises:
acquiring, in response to determining that a traffic carried by the shortest path causes congestion on the first outbound interface, a preset routing strategy corresponding to the multipath group forwarding table;
adjusting a forwarding weight value of each path in the first multipath group based on the preset routing strategy, wherein the forwarding weight value of each path is used to indicate, when selecting the path from the first multipath group for packet forwarding, a traffic ratio carried by the path.

2. The method of claim 1, wherein the multipath group forwarding table comprises a software forwarding table and a hardware forwarding table; the method further comprises:
calculating a shortest path and a non-shortest path to the second network device;
generating a software forwarding table entry for each shortest path and each non-shortest path respectively to obtain the software forwarding table, wherein each software forwarding table entry comprises a forwarding weight value of a path, and an initial forwarding weight value of the non-shortest path is 0;
for each software forwarding table entry with a forwarding weight value other than 0, making N copies of information in the software forwarding table entry other than the forwarding weight value to obtain N hardware forwarding table entries, and issuing the N hardware forwarding table entries to a hardware resource to obtain the hardware forwarding table;
wherein N=the forwarding weight value of the software forwarding table entry * a preset number of table entries of the hardware forwarding table /a sum value of forwarding weight values included in the software forwarding table entries.

3. The method of claim 2, wherein the multipath group forwarding table comprises a routing type marker; acquiring a preset routing strategy corresponding to the multipath group forwarding table comprises:
acquiring a preset routing strategy corresponding to the routing type marker;
wherein the preset routing strategy at least comprises one of following strategies: adjusting a forwarding load of a congested outbound interface to 0, reducing a forwarding load of a congested outbound interface without increasing a forwarding load of the non-shortest path, reducing a forwarding load of a congested outbound interface with increasing a forwarding load of the non-shortest path.

4. The method of claim 1, wherein the first network device stores a first interface state table and a second interface state table corresponding to the multipath group forwarding table, the first interface state table comprises an interface state of each outbound interface of the first network device, and the second interface state table comprises a bandwidth usage of a traffic carried by each path in the first multipath group for the outbound interface;
before acquiring, in response to determining that a traffic carried by the shortest path causes congestion on the first outbound interface, a preset routing strategy corresponding to the multipath group forwarding table, the method further comprises:
in response to determining that the interface state of the first interface in the first interface state table changes to a congested state, acquiring a first bandwidth usage of the traffic carried by the shortest path for the first outbound interface from the second interface state table;
in response to determining that the first bandwidth usage meets a preset congestion condition, determining that the traffic carried by the shortest path causes congestion on the first outbound interface.

5. The method of claim 4, wherein the first interface state table further comprises a bandwidth usage and a buffer usage of each outbound interface; the method further comprises:
for each outbound interface in the first interface state table, updating the bandwidth usage and the buffer usage of the outbound interface every preset duration;
in response to determining that an updated bandwidth usage of the outbound interface reaches a preset bandwidth threshold, or in response to determining that an updated buffer usage of the outbound interface reaches a preset buffer threshold, setting the interface state of the outbound interface to the congested state.

6. The method of claim 4, wherein adjusting a forwarding weight value of each path in the first multipath group based on the preset routing strategy, comprises:
adjusting the forwarding weight value of each path in the first multipath group based on the preset routing strategy and a bandwidth usage of each outbound interface comprised in the second interface state table.

7. The method of claim 1, wherein multiple paths between the first network device and a third network device form a second multipath group, and in a case where the first multipath group is the same as the second multipath group, the first multipath group and the second multipath group share the multipath group forwarding table.

8. An apparatus for maintaining routing information, wherein the apparatus is applied to a first network device which comprises a multipath group forwarding table, a first multipath group corresponding to the multipath group forwarding table comprises a shortest path and a non-shortest path, each path being used to indicate a path between the first network device and a second network device; and wherein a forwarding table entry of the shortest path comprises a first outbound interface of the first network device; the apparatus comprises:
an acquiring module, to acquire, in response to determining that a traffic carried by the shortest path causes congestion on the first outbound interface, a preset routing strategy corresponding to the multipath group forwarding table;
an adjusting module, to adjust a forwarding weight value of each path in the first multipath group based on the preset routing strategy, wherein the forwarding weight value of each path is used to indicate, when selecting the path from the first multipath group for packet forwarding, a traffic ratio carried by the path.

9. The apparatus of claim 8, wherein the multipath group forwarding table comprises a software forwarding table and a hardware forwarding table; the apparatus further comprises a generating module,
wherein the generating module is to:
calculate a shortest path and a non-shortest path to the second network device;
generate a software forwarding table entry for each shortest path and each non-shortest path respectively to obtain the software forwarding table, wherein each software forwarding table entry comprises a forwarding weight value of a path, and an initial forwarding weight value of the non-shortest path is 0;
for each software forwarding table entry with a forwarding weight value other than 0, make N copies of information in the software forwarding table entry other than the forwarding weight value to obtain N hardware forwarding table entries, and issue the N hardware forwarding table entries to a hardware resource to obtain the hardware forwarding table;
wherein N=the forwarding weight value of the software forwarding table entry * a preset number of table entries of the hardware forwarding table /a sum value of forwarding weight values included in the software forwarding table entries.

10. The apparatus of claim 9, wherein the multipath group forwarding table comprises a routing type marker; the acquiring module is specifically to:
acquire a preset routing strategy corresponding to the routing type marker;
wherein the preset routing strategy at least comprises one of following strategies: adjusting a forwarding load of a congested outbound interface to 0, reducing a forwarding load of a congested outbound interface without increasing a forwarding load of the non-shortest path, reducing a forwarding load of a congested outbound interface with increasing a forwarding load of the non-shortest path.

11. The apparatus of claim 8, wherein the first network device stores a first interface state table and a second interface state table corresponding to the multipath group forwarding table, the first interface state table comprises an interface state of each outbound interface of the first network device, and the second interface state table comprises a bandwidth usage of a traffic carried by each path in the first multipath group for the outbound interface; the apparatus further includes a determining module, wherein
the acquiring module is further to acquire, in response to determining that the interface state of the first interface in the first interface state table changes to a congested state, a first bandwidth usage of the traffic carried by the shortest path for the first outbound interface from the second interface state table;
the determining module is to determine, in response to determining that the first bandwidth usage meets a preset congestion condition, that the traffic carried by the shortest path causes congestion on the first outbound interface.

12. The apparatus of claim 11, wherein the first interface state table further comprises a bandwidth usage and a buffer usage of each outbound interface; the apparatus further comprises an updating module and a setting module, wherein
the updating module is to update, for each outbound interface in the first interface state table, the bandwidth usage and the buffer usage of the outbound interface every preset duration;
the setting module is to set, in response to determining that an updated bandwidth usage of the outbound interface reaches a preset bandwidth threshold, or in response to determining that an updated buffer usage of the outbound interface reaches a preset buffer threshold, the interface state of the outbound interface to the congested state.

13. The apparatus of claim 11, wherein the adjusting module is specifically to:
adjust the forwarding weight value of each path in the first multipath group based on the preset routing strategy and a bandwidth usage of each outbound interface comprised in the second interface state table.

14. The apparatus of claim 8, wherein multiple paths between the first network device and a third network device form a second multipath group, and in a case where the first multipath group is the same as the second multipath group, the first multipath group and the second multipath group share the multipath group forwarding table.

15. A first network device, wherein the first network device comprises a multipath group forwarding table, a first multipath group corresponding to the multipath group forwarding table comprises a shortest path and a non-shortest path, each path being used to indicate a path between the first network device and a second network device; and wherein a forwarding table entry of the shortest path comprises a first outbound interface of the first network device; the first network device comprises:
a processor;
a transceiver;
a machine readable storage medium storing machine executable instructions, which when executed by the processor, cause the processor to perform:
acquiring, in response to determining that a traffic carried by the shortest path causes congestion on the first outbound interface, a preset routing strategy corresponding to the multipath group forwarding table;
adjusting a forwarding weight value of each path in the first multipath group based on the preset routing strategy, wherein the forwarding weight value of each path is used to indicate, when selecting the path from the first multipath group for packet forwarding, a traffic ratio carried by the path.

16. The first network device of claim 15, wherein the multipath group forwarding table comprises a software forwarding table and a hardware forwarding table; the machine executable instructions further cause the processor to execute:
calculating a shortest path and a non-shortest path to the second network device;
generating a software forwarding table entry for each shortest path and each non-shortest path respectively to obtain the software forwarding table, wherein each software forwarding table entry comprises a forwarding weight value of a path, and an initial forwarding weight value of the non-shortest path is 0;
for each software forwarding table entry with a forwarding weight value other than 0, making N copies of information in the software forwarding table entry other than the forwarding weight value to obtain N hardware forwarding table entries, and issuing the N hardware forwarding table entries to a hardware resource to obtain the hardware forwarding table;
wherein N=the forwarding weight value of the software forwarding table entry * a preset number of table entries of the hardware forwarding table /a sum value of forwarding weight values included in the software forwarding table entries.

17. The first network device of claim 16, wherein the multipath group forwarding table comprises a routing type marker; the machine executable instructions further cause the processor to execute:
acquiring a preset routing strategy corresponding to the routing type marker; wherein the preset routing strategy at least comprises one of following strategies: adjusting a forwarding load of a congested outbound interface to 0, reducing a forwarding load of a congested outbound interface without increasing a forwarding load of the non-shortest path, reducing a forwarding load of a congested outbound interface with increasing a forwarding load of the non-shortest path.

18. The first network device of claim 15, wherein the first network device stores a first interface state table and a second interface state table corresponding to the multipath group forwarding table, the first interface state table comprises an interface state of each outbound interface of the first network device, and the second interface state table comprises a bandwidth usage of a traffic carried by each path in the first multipath group for the outbound interface;
the machine executable instructions further cause the processor to execute:
in response to determining that the interface state of the first interface in the first interface state table changes to a congested state, acquiring a first bandwidth usage of the traffic carried by the shortest path for the first outbound interface from the second interface state table;
in response to determining that the first bandwidth usage meets a preset congestion condition, determining that the traffic carried by the shortest path causes congestion on the first outbound interface.

19. The first network device of claim 18, wherein the first interface state table further comprises a bandwidth usage and a buffer usage of each outbound interface; the machine executable instructions further cause the processor to execute:
for each outbound interface in the first interface state table, updating the bandwidth usage and the buffer usage of the outbound interface every preset duration;
in response to determining that an updated bandwidth usage of the outbound interface reaches a preset bandwidth threshold, or in response to determining that an updated buffer usage of the outbound interface reaches a preset buffer threshold, setting the interface state of the outbound interface to the congested state.

20. The first network device of claim 18, wherein the machine executable instructions further cause the processor to execute:
adjusting the forwarding weight value of each path in the first multipath group based on the preset routing strategy and a bandwidth usage of each outbound interface included in the second interface state table.

21. The first network device of claim 15, wherein multiple paths between the first network device and a third network device form a second multipath group, and in a case where the first multipath group is the same as the second multipath group, the first multipath group and the second multipath group share the multipath group forwarding table.

22. A machine readable storage medium storing machine executable instructions which, when called and executed by a processor, cause the processor to implement the method of any of claims 1-7.

23. A computer program product, wherein the computer program product causes a processor to implement the method of any one of claims 1-7.
